# EUROPEAN PATENT SPECIFICATION

(11) **EP 0 412 942 B1**
(45) Date of publication and mention of the grant of the patent: **23.03.1994**
(21) Application number: 90830253.2
(22) Date of filing: 05.06.1990
(51) Int. Cl.: B60R 22/32

(54) **Quick-release device for safety belts for motorvehicles**
Gerät zum schnellen Lösen von Kraftfahrzeugsicherheitsgurten
Dispositif de libération rapide de ceinture de securité pour véhicules automobiles

(30) Priority: 10.08.1989 IT 3593389 U
(43) Date of publication of application: 13.02.1991
(73) Proprietor: Barbuti, Vittorio Romano, I-56100 Pisa (IT)
(72) Inventor: Barbuti, Vittorio Romano, I-56100 Pisa (IT)
(74) Representative: de Simone, Domenico

(56) References cited:
- CH-A- 596 013
- DE-A- 2 903 210
- FR-A- 2 507 864

## Description

The present invention relates to a quick-release device for safety belts for motorvehicles.

More particularly, the present invention relates to a hand-released safety device fitted to the end portion of the seatbelt, which device allows the latter to be released also in the case of lock-in of the latching device, due to impacts, accidents or malfunction of the same.

In fact, as is well-known, safety belts which at present are assembled in motorvehicles are equipped with a latching system consisting of two members: the first member possibly sliding along the seatbelt itself, having a loop and a differently shaped protruding portion intended for being engaged with the corresponding fastening device assembled in the part of the passenger compartment that is comprised between the two front seats, and that is generally supported by a post member so that, as a result, it is at a height consistent with the position of the third fastening point provided on the inner wall of the motorvehicle, on the same vertical of the first fastening point, but at a lower position, so that as a result the seatbelt portion tightened between the latter and the latching system is tightened across the motorist's pelvis.

Fastening devices at present employed have in most cases a spring latching system which can be released by exerting a light pressure on a push-button so constructed that, by pressing the spring with the extremity connected to the seatbelt, the two side portions which are intended for being engaged with the proper housings provided on the extremity of the complementary portion are moved away from each other, so determining, when the compression action of the spring stops, the reciprocal latching of the too portions.

It often happens that such devices, due to a prolonged use, tamperings, impacts, accidents, remain locked in the latched position, so creating a lot of troubles for the motorist, who is forced to make difficult and not always easy movements for freeing himself from his assumed position.

This fact turns out to be even more inconvenient in case that the latching system malfunctions as a consequence of road accidents or in all cases when the possibility of going quickly out of the motorvehicle itself is of the essence.

Furthermore, among the solutions already well known in the art a release device is described in the CH-A-596013 patent.
Said device comprises a removable pin arranged as a hinge between two portions of the seat belt, wherein said two portions of the seat belt are provided with two comlementary end portions, each one provided with annular loops adapted to engage the removable pin. This solution has the disadvantage that the interruption of continuity of the seat belt is needed for its installation and this causes, therefore, a weakening of the safety device.

It is therefore apparent the need for having at disposed a quick-release device for the seatbelt, of a manually-operated type, in case of lock-in of the spring system.

In order to fulfill this need, it is proposed according to the present invention to realize a quick-release device provided on the portion of the fastening member connected to the seatbelt, consisting of a slip-removable pin with the function of a loop for the seat-belt itself, endowed with a clamping member and provided with a handgrip ring for exerting the slipping action, so as to be easily released by the motorist in case of necessity.

It is therefore a specific objet of the present invention a release device for safety belts provided on the latching device portion connected to the seat belt, said device comprising a first and a second annular loop in which a recess portion is provided between said first and said second annular loop and wherein said slip-removable pin and said first and second annular loops define an hollow space for the passage of said safety belt wherein said first and second annular loops are provided on the top of the latching device portion connected to the seat belt and wherein at the interior of said annular loop clamping means made of rubber are provided to prevent the pin from undesiderably slipping out.

Said clamping means provided in said ring loops are made up of rubber in a preferred embodiment of the present invention.

In addition, again according, to the present invention, a ring member is provided at the extremity of said slip-removable pin, to make the removal from the annular passages easier in case of necessity.

The present invention will be now described in an illustrative and not limiting way, with reference to the enclosed drawings in which:
Figure 1 shows a schematic view of a sitting motorist, with a safety belt endowed with the quick- release device according to the present invention in a fastened position;
Figure 2 shows a perspective view of the quick-release device according to the present invention fitted to a first embodiment of the latching element's portion connected to the seatbelt;
Figure 3 shows a perspective view of the quick-release device according to the present invention assembled on a second embodiment of the latching element's portion connected to the seatbelt, in a fastened position;
Figure 5 shows a perspective view of a quick-release device according to the present invention, assembled on a third embodiment of the latching element's portion connected to the seatbelt.

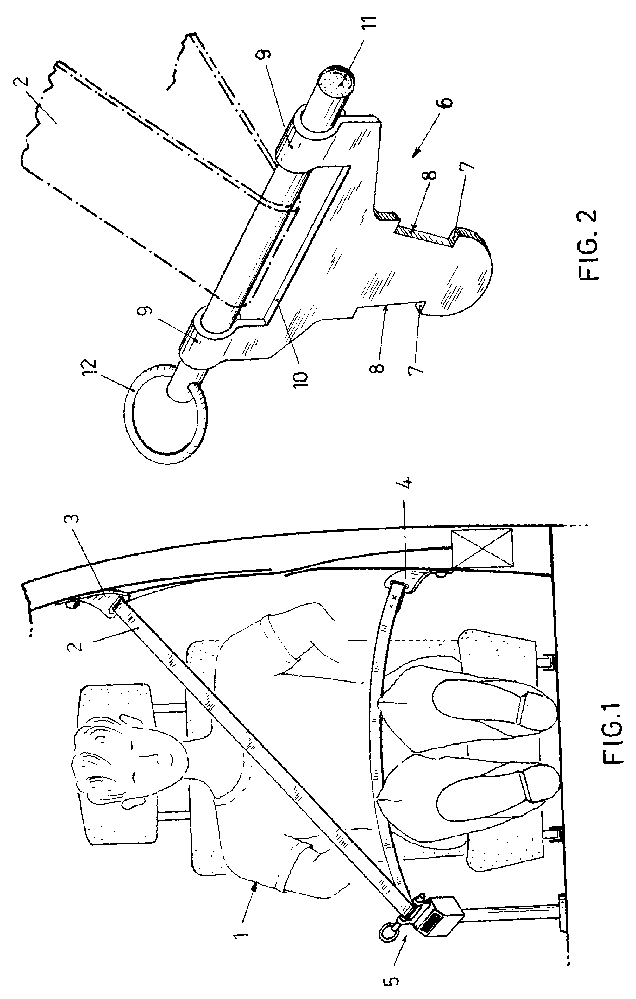

As can be observed from figure 1, the motorist 1 is tied by the seatbelt 2 which has three fastening points:
point 3 and point 4 fixed on the interior portion of the passenger compartement, and the fastening point 5 provided between the two front seats.

As is well-known, one of the two portions of the fastening members, and more precisely that endowed with the spring system, of the latching elements and of the release push-button is fixed in position 5, while its complementary portion 6 slips along the seatbelt 2.

As is more apparent from figures 2, 3 and 4 that portion 6 comprises an end portion, variously shaped and having lugs 7 and recesses 8 for engaging the fastening elements provided in the fixed portion and a top portion comprising two annular loops 9 and a recessed portion 10.

Between said annular loops 9 a slip-removable pin 11 is provided, endowed with a handgrip ring 12 which defines, with the hollow 10, a zone intended to the passage of seatbelt 2.

Each of the two rings 9, in addition, has at his interior portion an element preferably made up of rubber to prevent the pin 11 from being inadvertently slipped out.

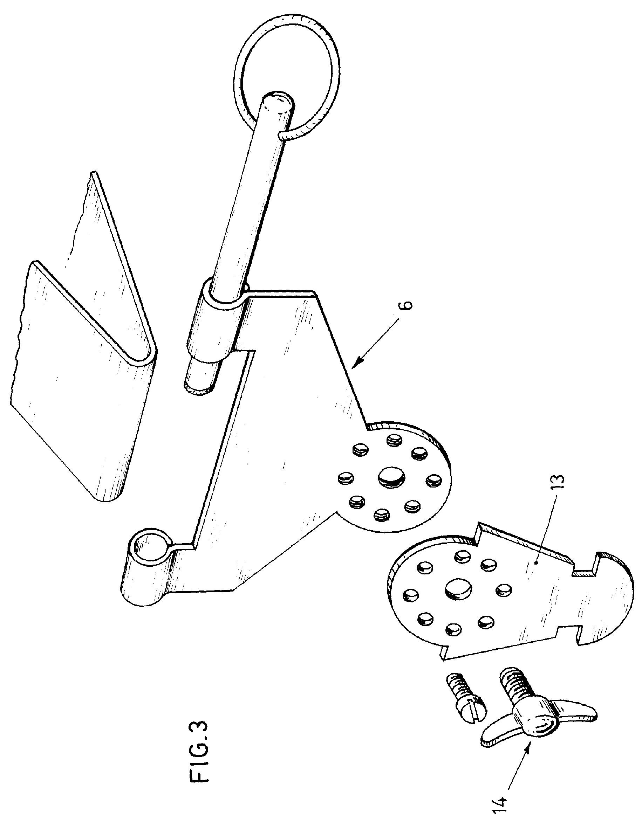

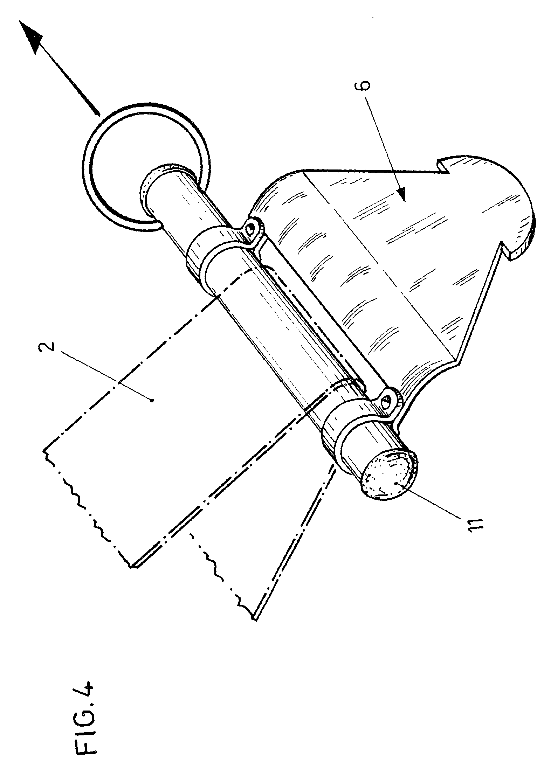

Alternative embodiments of the end portion of the element 6 are shown in figures 3 and 4.

In particular, in Figure 3 the end portion consists of an orientable plate 13, which can be fixed with screws 14 to portion 6 at various angles according to the position of the complementary fastening position.

Similarly, in Figure 4 a latching element is shown, sliding on the seatbelt correspondingly to pin 11, in which the end portion is at a different angle with respect to the plane of the two loops 9, in order to make the engagement with the fixed latching element easier.

In this case also the pin 11 can be slipped in the direction of the arrow so as to free the seatbelt 2 in case of lock-in of portion 6 in the fixed device 5.

## Claims

1. A release device for safety belts provided on the latching device portion (6) connected to the seat belt (2), said device comprising a first and a second annular loop (9) in which a recess portion (10) is provided between said first and said second annular loop (9) and wherein said slip-removable pin (11) and said first and second annular loops (9) define an hollow space for the passage of said safety belt (2) characterized in that said first and second annular loops (9) are provided on the top of the latching device portion (6) connected to the seat belt (2) and that at the interior of said annular loop (9) clamping means made of rubber are provided.

## Patentansprüche

1. Vorrichtung zum Loesen von Sicherheitsgurten, die an dem mit dem Sitzgurt (2) verbundenen Verschlusselement (6) vorgesehen ist, mit einem ersten und einem zweiten ringfoermigen Scharnierteil (9), wobei zwischen den vorgenannten ersten und zweiten ringfoermigen Scharnierteilen (9) eine Ausparung (10) gebildet ist und ein abnehmbar Gleit-Zapfen (11) und die vorgenannte erste und zweite ringfoermigen Scharnierteile (9) einen Hohlraum zum Durchfuehren des vorgenannten Sicherheitsgurten (2) bilden, dadurch gekennzeichnet, dass die vorgenannten erste und zweite ringfoermigen Scharnierteile (9) auf dem oberen Teil des Verschlusselementes (6) vorgesehen sind, der an den Sitzgurt angeschlossen ist, und dass im Inneren des vorgenannten ringfoermigen Scharnierteiles (9) Sperrmittel aus Gummi angeordnet sind.

## Revendications

1. Dispositif de liberation de ceinture de securité, prevu sur la partie de verrouillage (6) reliée à la ceinture (2) du siège, ledit dispositif comprenant une première et une deuxième charnière annulaire (9) dans lequel un créneau (10) est prevu entre lesdites première et deuxième charnières annulaires (9) et dans lequel un pivot coulant amovible (11) et lesdites première et deuxième charnières annulaires (9) forment un espace creux pour laisser passer ladite ceinture de secutité (2), charactérisé en ce que lesdites première et deuxième charnière (9) sont placées sur la partie supérieur de la partie de verrouillage (6) reliée à la ceinture (2) du siège et en ce que des moyens de verrouillage à caoutchouc sont disposés dans l'intérieur de ladite charnière annulaire (9).
